(19) Europäisches Patentamt
European Patent Office
Office européen des brevets

(11) **EP 3 557 338 B1**

(12) **EUROPÄISCHE PATENTSCHRIFT**

(45) Veröffentlichungstag und Bekanntmachung des Hinweises auf die Patenterteilung:
**21.09.2022 Patentblatt 2022/38**

(21) Anmeldenummer: **18168274.1**

(22) Anmeldetag: **19.04.2018**

(51) Internationale Patentklassifikation (IPC):
**G05B 9/02** *(2006.01)* **G05B 19/042** *(2006.01)*

(52) Gemeinsame Patentklassifikation (CPC):
**G05B 9/02; G05B 19/0426**

(54) **VERFAHREN ZUM PROGRAMMIEREN EINER SICHERHEITSSTEUERUNG**

METHOD FOR PROGRAMMING A SAFETY CONTROLLER

PROCÉDÉ DE PROGRAMMATION D'UNE COMMANDE DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2019 Patentblatt 2019/43**

(73) Patentinhaber: **Wieland Electric GmbH**
**96052 Bamberg (DE)**

(72) Erfinder: **LAUBSCH, Jörg**
**14059 Berlin (DE)**

(74) Vertreter: **2K Patentanwälte Blasberg Kewitz & Reichel**
**Partnerschaft mbB**
**Schumannstrasse 27**
**60325 Frankfurt am Main (DE)**

(56) Entgegenhaltungen:
**DE-A1-102009 011 679 US-A1- 2004 199 364**

• **Klaus Kroner ET AL: "Luft/Gas-Verhältnisregelung an industriellen Beheizungseinrichtungen", GASWÄRME International (55) Nr. 4/2006, 1. April 2006 (2006-04-01), Seiten 263-269, XP055508470, Gefunden im Internet: URL:https://docuthek.kromschroeder.com/documents/download.php?lang=de&doc=14877 [gefunden am 2018-09-20]**
• **Anonymous: "User Manual for PLC Programming with CoDeSys 2.3", , 1. Januar 2005 (2005-01-01), XP055508467, Gefunden im Internet: URL:http://www.deltaelektronik.dk/DVD/Produkter/Infranor/Manual/Cybelec/ELITE-HMI/CoDeSys_V23_Programmering.pdf [gefunden am 2018-09-20]**

EP 3 557 338 B1

**Beschreibung**

Die Erfindung betrifft ein Verfahren zum Programmieren einer Sicherheitssteuerung, ausgelegt zum gemäß einer Sicherheitsvorschrift sicheren Ein- und Ausschalten eines elektrischen Verbrauchers, wobei Schalteingänge und/oder Schaltausgänge der Sicherheitssteuerung logisch verknüpft werden, wobei die Schalteingänge zwei Analogsignal-Schalteingänge umfassen.

Sicherheitssteuerungen werden vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge, Brenner etc. Hierzu wird die Stromversorgung für den elektrischen Verbraucher über Schaltausgänge der Sicherheitssteuerung gesteuert, die zur Erfüllung der einschlägigen Sicherheitsvorschriften und -zertifizierungen hinsichtlich der funktionalen Sicherheit ausgelegt sind (EN ISO 13849, EN/IEC 61508, EN/IEC 61511, EN/IEC 62061 etc.). Dazu sind die internen Schaltkreise typischerweise redundant ausgestaltet, z.B. solche zum Ein- und Ausschalten des elektrischen Verbrauchers über zwei in Reihe geschaltete Relais, die von getrennten Stromkreisen gesteuert werden.

Sicherheitssteuerungen weisen üblicherweise eine Anzahl von Schalteingängen und -ausgängen zum Anschluss der Arbeitskontakte eines Sicherheitsschaltelements auf. Das Sicherheitsschaltelement kann z.B. ein Not-Aus-Schalter sein, eine Positions- oder Stellungsüberwachung z.B. einer Schutztür, eine Lichtschranke, eine Schaltmatte etc. Das Sicherheitsschaltelement hat dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll die Stromzufuhr zu dem elektrischen Verbraucher dann unterbrochen werden, wenn das Sicherheitsschaltelement nicht mehr in der Position "sicher" ist.

Sicherheitssteuerungen sind häufig auch modular aufgebaut, so dass mehrere, unterschiedlich geartete Sicherheitsschaltelemente angeschlossen werden können. Weiterhin können so auch mehrere elektrische Verbraucher gezielt angesteuert werden. Bei derartigen größeren Sicherheitssteuerungen, seien sie nun modular oder nichtmodular aufgebaut, ist eine Programmierung allein anhand von manuellen Einstellschaltern nicht mehr praktikabel. Daher wird hier häufig auf eine Programmierung auf einem digitalen Computer zurückgegriffen, wie sie beispielsweise auch aus dem Bereich der Speicherprogrammierbaren Steuerungen (SPS) bekannt ist.

Da die Signalein- und Ausgänge typischerweise mit logischen/binären Signalen beschaltet sind (z.B. +24 V = logisch 1 / 0 V = logisch 0), stellt die Programmieroberfläche dabei logische Funktionsbausteine zur Verfügung, so z.B. einfache Bausteine wie "UND" oder "ODER", die aus zwei oder mehr binären Eingangswerten einen einzelnen Ausgangswert erzeugen, oder aber Funktionsbausteine mit hinterlegten Parameterwerten, die ein Eingangssignal anhand des jeweiligen Parameterwerts modifizieren oder auch ein vorbestimmtes Ausgangssignal anhand des Parameterwerts erzeugen.

Nicht alle sicherheitsrelevanten Zustände eines Systems lassen sich jedoch in digitalen Eingangssignalen abbilden. Oft ist die Sicherheit eines Prozesses abhängig von bestimmten Parametern wie Temperatur, Dichte etc. innerhalb des Systems. Damit entsprechende Signale innerhalb einer Sicherheitssteuerung verwertet werden können, sind dafür entweder zusätzliche Geräte zur Vorverarbeitung vonnöten, was jedoch eine höhere Komplexität hinsichtlich der Hardware bedeutet, oder die Sicherheitssteuerung muss durch entsprechende Module o.ä. mit Analogsignal-Schalteingängen ausgestattet werden, die analoge Signale, d.h. in der Regel Strom- oder Spannungswerte einlesen können.

Aus Klaus Kroner et. al., "Luft/Gas-Verhältnisregelung an industriellen Beheizungseinrichtungen", GASWÄRME International (55) Nr. 4/2006, (20060401), S. 263 - 269 sind Auswertungsprinzipien für Verhältnisregelungen bekannt. Aus "User Manual for PLC Programming with CoDeSys 2.3" sind Grundsätze der Programmierung von Speicherprogrammierbaren Steuerungen bekannt.

Vor diesem Hintergrund ist es Aufgabe der Erfindung, ein Verfahren der eingangs genannten Art anzugeben, durch welches die Verarbeitung von Analogsignalen und deren komplexe logische Verknüpfung bei einer geringen Wahrscheinlichkeit von Fehlern bei der Programmierung ermöglicht wird.

Diese Aufgabe wird erfindungsgemäß gelöst, indem die logische Verknüpfung einen Funktionsbaustein umfasst, der zumindest zwei Eingänge aufweist, die jeweils zur Aufnahme eines vorverarbeiteten Eingangssignals von einem der Analogsignal-Schalteingänge ausgebildet sind, wobei ein erstes Verhältnis für die an den Eingängen anliegenden Signale vorgegeben wird, der Funktionsbaustein einen Ausgang aufweist, dessen Signal in Abhängigkeit des ersten vorgegebenen Verhältnisses gebildet wird, wobei Verhalten des Funktionsbausteins durch die Gleichung

$$\frac{Ia\,1}{Ia\,2} = \frac{n_1}{n_2}$$

repräsentiert wird, wobei der Ausgang ein digitaler Ausgang ist, wobei der Ausgang bei Über- oder Unterschreiten des ersten vorgegebenen Verhältnisses, d.h. im Falle des Überschreitens wenn die Relation Ia1 * n2 > Ia2 * n1 wahr wird und es vorher nicht war bzw. im Falle des Unterschreitens wenn die Relation Ia1 * n2 < Ia2 * n1 wahr wird und es vorher nicht war, seinen Wert ändert und dabei einen ersten vorgegebenen Wert annimmt, wobei Ia1 das erste analoge Eingangssignal und Ia2 das zweite analoge Eingangssignal repräsentiert und n1 und n2 positive ganze Zahlen sind.

Die Erfindung geht dabei von der Überlegung aus, dass eine Verarbeitung von Analogsignalen und deren komplexe logische Verknüpfung unter Vermeidung von Fehlern bei der Programmierung erreichbar wäre, wenn hierfür in der Programmieroberfläche der Sicherheitssteuerung, in der die logische Verknüpfung der Eingangs- mit den Ausgangsignalen erfolgt, auch direkt entsprechende Funktionsbausteine für die Auswertung analoger Eingangssignale vorgesehen werden.

Dadurch kann die Verarbeitung und Umsetzung analoger Signale in logische Signale und deren weitere Verarbeitung innerhalb der Logik innerhalb einer Programmieroberfläche übersichtlich erfolgen, so dass Fehler minimiert werden.

Hierbei ergibt sich jedoch das weitere Problem, dass in Programmieroberflächen für Sicherheitssteuerungen (im Gegensatz zu nicht funktional sicheren SPSen) keine vollkommen freie Programmierung möglich ist, da nicht jede beliebige Programmierung auf Einhaltung der genannten Sicherheitsnormen- und zertifizierungen geprüft werden kann. Stattdessen muss die Programmierung mit vorgegebenen, innerhalb eines vorgegebenen Rahmens parametrierbaren Funktionsbausteinen erfolgen. Die einzelnen in der grafischen Programmieroberfläche zur Verfügung gestellten Funktionsbausteine müssen dabei mit ihrem jeweiligen Softwarecode in der Regel von einer Zertifizierungsstelle geprüft und zertifiziert werden. Für jeden neuen Funktionsbaustein ist eine solche Sicherheitszertifizierung erforderlich.

Um das eingangs genannte Erfordernis der Minimierung der Fehleranfälligkeit beim Programmiervorgang mit dem Erfordernis der möglichst umfassenden Verarbeitung von Analogsignalen und deren komplexer logischer Verknüpfung zu vereinen, sollten daher Funktionsbausteine definiert und bereitgestellt werden, die sich einerseits zur Erfüllung der systemseitigen Erfordernisse an die funktionale Sicherheit eignen, und andererseits auch eine entsprechende Zertifizierung ermöglichen.

Hierbei hat sich herausgestellt, dass dies insbesondere durch einen Vergleichsbaustein möglich ist, der die analogen Signale zweier Analogsignal-Eingänge vergleicht und aus dem Vergleich einen Wert für die Weiterverarbeitung bildet. Besonders flexibel ist ein solcher Funktionsbaustein, wenn ein Verhältnis des ersten Signals zum zweiten Signal angegeben werden kann, d.h. als Parameter im Funktionsbaustein hinterlegt werden kann, auf dessen Basis der Ausgangswert erstellt wird. Ein derartiger Funktionsbaustein ermöglicht einen flexiblen Einsatz der Sicherheitssteuerung in einer Vielzahl von Anwendungen.

Das Verhalten des Funktionsbausteins wird dabei durch die Gleichung

$$\frac{Ia\,1}{Ia\,2} = \frac{n_1}{n_2}$$

repräsentiert, wobei Ia1 das erste analoge Eingangssignal und Ia2 das zweite analoge Eingangssignal repräsentiert. n1 und n2 sind positive ganze Zahlen. Das Verhältnis der Eingangssignale Ia1/Ia2 wird mit dem Verhältnis der parametrierten ganzen Zahlen n1 und n2 verglichen und daraus in geeigneter Weise ein Ausgangssignal an einem Ausgang des Funktionsbausteins generiert. Durch die Vorgabe ganzer Zahlen wird eine besonders einfache Parametrierung in der Programmieroberfläche ermöglicht.

Weiterhin ist der Ausgang des Funktionsbausteins ein digitaler Ausgang. Das bedeutet, dass der Ausgang des Funktionsbausteins selbst ein digitales Signal liefert, d.h. eine logische 1 oder eine logische 0, die in der weiteren Logikprogrammierung verwendet und weiterverarbeitet werden kann, wo letztlich digitale Ausgangssignale für die Aktoren zum Schalten des elektrischen Verbrauchers erzeugt werden. Der Funktionsbaustein stellt damit eine praktische und flexible Möglichkeit der Erzeugung von digitalen Signalen aus analogen Eingangssignalen zur Verfügung. In der Regel wird ein digitaler Wert einem Gutzustand entsprechen, d.h. funktional sicher, und der andere digitale Wert dem Schlechtzustand, d.h. nicht sicher.

Dabei ändert der Ausgang des Funktionsbausteins bei Über- oder Unterschreiten des ersten vorgegebenen Verhältnisses seinen Wert und nimmt dabei einen ersten vorgegebenen Wert an. Mit anderen Worten: Der Zustand des Ausgangs des Funktionsbausteins wird vom Über- oder Unterschreiten des parametrierten Verhältnisses abhängig gemacht. Aus der Umformung der o.g. Gleichung in

$$Ia\,1 * n_2 = Ia\,2 * n_1$$

ergibt sich somit im Falle des Überschreitens: Wird die Relation Ia1 * n2 > Ia2 * n1 wahr (und war es vorher nicht), so ändert der Ausgang seinen Wert und nimmt einen ersten Wert an, z.B. den Wert 0 oder LOW (je nach Bezeichnung der digitalen Werte). Im Falle des Unterschreitens hingegen gilt: Wird die Relation Ia1 * n2 < Ia2 * n1 wahr (und war es vorher nicht), so ändert der Ausgang seinen Wert und nimmt einen ersten Wert an. Nimmt das Verhältnis im Betrieb wieder den vorherigen Wert an, d.h. wird die Über- bzw. Unterschreitung wieder rückgängig gemacht, kann der Ausgang wieder den entgegengesetzten Wert annehmen (dies aber ggf. nicht sofort, siehe unten in Bezug auf Hysterese).

In weiterer vorteilhafter Ausgestaltung des Verfahrens kann auch ein Verhältnisfenster angegeben werden, welches zur Bestimmung des Wertes des Ausgangs herangezogen wird. Hierzu wird vorteilhafterweise ein zweites Verhältnis vorgegeben, und das Signal des Ausgangs wird weiterhin in Abhängigkeit des zweiten vorgegebenen Verhältnisses gebildet.

Ist der Ausgang wie oben beschrieben ein digitaler Ausgang, so ändert im Falle der Definition eines solchen Verhältnisfensters der Ausgang bei Überschreiten des ersten vorgegebenen Verhältnisses oder bei Unterschreiten des zweiten vorgegebenen Verhältnisses vorteilhafterweise seinen Wert und nimmt den ersten vorgegebenen Wert an. Mit anderen Worten: Es werden zwei voneinander unterschiedliche Verhältnisse (jeweils vorteilhafterweise über ein Verhältnis ganzer Zahlen) parametriert, von denen eines (das erste) größer als das andere (das zweite) ist. Hierdurch bilden die parametrierten Verhältnisse ein Wertefenster für das Verhältnis der analogen Eingangssignale. Der erste vorgegebene Wert, z.B. HIGH/1 oder Gutzustand wird nur erzeugt, wenn das Verhältnis der analogen Eingangssignale innerhalb des Fensters liegt, d.h. wenn ein erstes konfigurierbares Verhältnis (n1/n2) nicht über- und ein zweites Verhältnis (n3/n4) nicht unterschritten wird. Sobald das erste Verhältnis n1/n2 überschritten oder das zweite Verhältnis n3/n4 unterschritten wird, ändert der Ausgang seinen Wert.

In einer weiteren vorteilhaften Ausgestaltung des Verfahrens erfolgt das "Rückschalten" auf den vorherigen Wert nach einem Rückgängigmachen der Überschreitung des ersten Verhältnisses unter Korrektur durch eine definierte Hysterese. Mit anderen Worten: Der Ausgang ändert nach einem Über- oder Unterschreiten des ersten vorgegebenen Verhältnisses (und der damit verbundenen Wertänderung, siehe oben) vorteilhafterweise seinen Wert erst wieder nach Unterschreiten des ersten vorgegebenen Verhältnisses abzüglich eines ersten vorgegebenen Hysteresewerts (im Falle des vorherigen Überschreitens), bzw. erst wieder nach Überschreiten des ersten vorgegebenen Verhältnisses zuzüglich eines ersten vorgegebenen Hysteresewerts (im Falle des vorherigen Unterschreitens). Ändert der Ausgang seinen Wert z.B. zum Schlechtzustand nach Überschreiten des Verhältnisses n1/n2, so wird diese Änderung bei erneutem Unterschreiten des Verhältnisses nicht sofort rückgängig gemacht, sondern erst nach Unterschreiten eines Wertes n1/n2 - x.

Gleiches gilt im Falle der Definition zweier Verhältnisse in Form eines Fensters: Vorteilhafterweise ändert der Ausgang nach einem Unterschreiten des zweiten vorgegebenen Verhältnisses seinen Wert erst wieder nach Überschreiten des zweiten vorgegebenen Verhältnisses zuzüglich eines zweiten vorgegebenen Hysteresewerts. Die Hysteresewerte können unabhängig voneinander oder gleich sein.

In besonders vorteilhafter Ausgestaltung wird der erste oder der zweite Hysteresewert als prozentualer Anteil des ersten bzw. zweiten Verhältnisses angegeben. Wird für das Verhältnis n1/n2 also eine Hysterese von 10% angegeben, so wird der Wert des Ausgangs nach Überschreiten von n1/n2 erst wieder bei Unterschreiten des Verhältnisses 0,9*n1/n2 auf den vorherigen Wert zurückgestellt. Eine solche prozentuale Angabe ermöglicht eine besonders einfache und fehlerarme Programmierung.

In weiterer vorteilhafter Ausgestaltung entspricht der erste vorgegebene Wert einem Schlechtzustand und es wird eine Plausibilitätsprüfung durchgeführt, ob der Wert des ersten vorgegebenen Verhältnisses größer ist als der Wert des zweiten vorgegebenen Verhältnisses. Eine derartige Plausibilitätsprüfung bietet eine zusätzliche Sicherheitsmaßnahme bei der Programmierung: Wird ein Fenster angegeben, innerhalb dessen der Wert des analog erfassten Verhältnisses liegen soll, so wird automatisch überprüft, ob das für eine Überschreitung konfigurierte Verhältnis (d.h. Schlechtzustand des Ausgangs bei Überschreitung) tatsächlich im Wert höher ist als das für eine Unterschreitung konfigurierte Verhältnis. Ist dies nicht der Fall, wird ein Fehler ausgegeben und/oder die Programmierung wird dem Benutzer so nicht ermöglicht.

In vorteilhafter Ausgestaltung des Verfahrens zeigen die von den Analogsignal-Schalteingängen erfassten Analogsignale Gas- oder Luftmassenströme an. Gerade im Bereich der Messung von Luft- und Gasmassenströmen bietet der beschriebene Funktionsblock bei der Programmierung besondere Vorteile, da bei Brennern der Luft-/Sauerstoffmassenstrom zum Gasmassenstrom immer in einem Verhältnis stehen muss, das sicher gezündet werden kann und im gesamten Betriebsbereich eine stabile und sichere Verbrennung an jedem einzelnen Brenner sicherstellt. Die Produktnorm EN 746-2 fordert in einer Thermoprozessanlage eine Sicherheitsfunktion der Verhältnisüberwachung. Durch das beschriebene Verfahren und den beschriebenen Funktionsbaustein kann diese sichere Verhältnisüberwachung in eine Sicherheitssteuerung integriert werden, so dass die Notwendigkeit separater Bauteile entfällt.

Ein Computerprogrammprodukt, welches direkt in den internen Speicher eines digitalen Computers mit einem Bildschirm geladen werden kann, umfasst vorteilhafterweise Softwarecodeabschnitte, die, wenn sie auf dem Computer ausgeführt werden, den Computer zum Ausführen des Verfahrens nach einem der vorhergehenden Ansprüche ertüchtigen, wobei die grafische Benutzeroberfläche vorteilhafterweise auf dem Bildschirm des Computers angezeigt wird. Ein derartiges Computerprogrammprodukt ist eine Programmiersoftware, die mittels der Hardware des Computers wie Bildschirm und Schnittstellen die Erstellung einer Programmierung mittels der beschriebenen grafischen Repräsentation von Schaltein- und ausgängen der Sicherheitssteuerung ermöglicht und entsprechende Werkzeuge zur Erstellung logischer Verknüpfungen mit beschriebenen Funktionsbausteinen zur Verfügung stellt.

Vorteilhafterweise ist ein derartiges Computerprogrammprodukt in den internen Speicher eines digitalen Computers geladen. Ein derartiger Computer kann ein üblicher Personal Computer sein, bei einer entsprechenden Schnittstelle ist es aber auch denkbar, eine derartige Software auch für Tablets oder sogar Smartphones anzupassen. Auch sonstige proprietäre Systeme können mit einer entsprechenden Software ausgestattet sein. Alle diese Systeme sind unter dem Begriff digitaler Computer zusammengefasst.

Ein Computerprogrammprodukt, welches direkt in den internen Speicher einer Sicherheitssteuerung geladen werden kann, umfasst vorteilhafterweise Softwarecodeabschnitte, die mittels des beschriebenen Verfahrens erstellt wurden. Hierbei wird die mittels der Software für den digitalen Computer erstellte Programmierung in den Speicher der Sicherheitssteuerung geladen, so dass diese unabhängig und autark lauffähig ist.

Eine Sicherheitssteuerung, ausgelegt zum gemäß einer Sicherheitsvorschrift sicheren Ein- und Ausschalten eines elektrischen Verbrauchers, ist vorteilhafterweise mit dem beschriebenen Verfahren programmiert.

Die mit der Erfindung erzielten Vorteile bestehen insbesondere darin, dass durch die Bereitstellung eines Funktionsbausteins, der ein Verhältnis von Analogsignalen und dem Über- oder Unterschreiten definierter Grenzverhältnisse ein digitales Signal erzeugt, eine Vielzahl von Aufgabenstellungen in eine Sicherheitssteuerung mit analogen Signaleingängen integriert werden kann und separate Vorrichtungen/Bauteile entfallen können. Da die Verarbeitung der Analogsignale dadurch auf der gleichen Programmieroberfläche wie die spätere logische Verknüpfung parametriert und programmiert wird, wird die Komplexität reduziert und Fehlerquellen werden minimiert.

Ein Ausführungsbeispiel der Erfindung wird anhand von Zeichnungen näher erläutert. Darin zeigen:

FIG 1    eine schematische Darstellung einer modularen Sicherheitssteuerung,

FIG 2    eine schematische Darstellung der modularen Sicherheitssteuerung in einer Betriebsart mit einem redundanten Schalter,

FIG 3    eine schematische Darstellung der Sicherheitssteuerung mit einem zur Programmierung ausgerüsteten digitalen Computer,

FIG 4    eine schematische Darstellung einer Programmieroberfläche zur Erstellung eines Logikschaltbildes,

FIG 5    eine schematische Darstellung eines Analogmoduls für die modulare Sicherheitssteuerung Signaleingängen für Analogsignale, und

FIG 6    eine schematische Darstellung eines Ausschnitts der Programmieroberfläche zur Erstellung eines Logikschaltbildes mit Darstellung eines Funktionsblocks zur Überwachung eines Verhältnisses von Werten an Analogsignal-Schalteingängen.

Gleiche Teile sind in allen Zeichnungen mit denselben Bezugszeichen versehen.

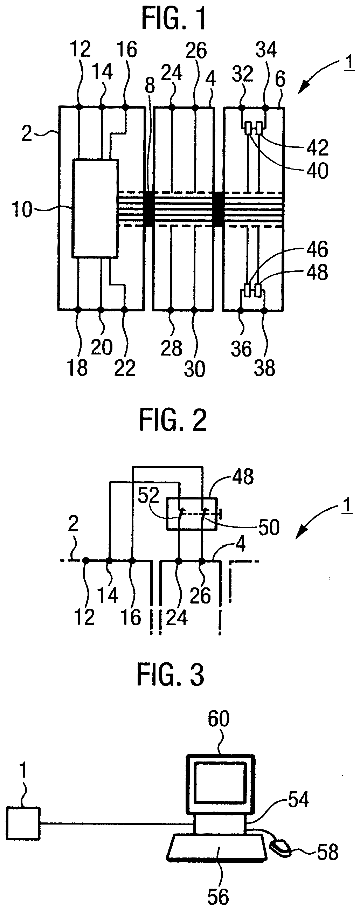

Die FIG 1 zeigt schematisch eine modulare Sicherheitssteuerung 1, umfassend ein Kopfmodul 2, ein Eingangserweiterungsmodul 4 und ein Ausgangserweiterungsmodul 6, die über einen Rückwandbus 8 datenseitig miteinander verbunden sind. Im Kopfmodul 2 ist eine zentrale Steuereinheit 10 angeordnet, die die Eingangssignale verarbeitet und daraus Ausgangssignale erzeugt. Die Sicherheitssteuerung 1 ist eine speicherprogrammierbare Steuerung, die zusätzlich gemäß der Norm EN ISO 13849-1 ausgestaltet, d.h. funktional sicher ist. Dies wird neben anderen Maßnahmen durch die sogenannte überwachte Redundanz gewährleistet, d.h. die Steuereinheit 2 umfasst zwei nicht näher gezeigte, redundant arbeitende Mikrocontroller, deren Ergebnisse permanent abgeglichen und auf Übereinstimmung geprüft werden.

Die Sicherheitssteuerung 1 weist eine Vielzahl von Klemmen 12 - 38 auf, von denen sechs Klemmen 12 - 22 am Kopfmodul 2, vier Klemmen 24 - 30 am Eingangserweiterungsmodul 4 und vier Klemmen 32 - 38 am Ausgangserweiterungsmodul 6 angeordnet sind. Die Steuereinheit 10 kann über den Rückwandbus 8 und ggf. weitere Prozessoreinheiten in den Erweiterungsmodulen 4, 6 jede der Klemmen 12 - 38 ansteuern bzw. abrufen.

Die Klemmen 32 - 38 des Ausgangserweiterungsmoduls 6 können paarweise in die Stromzufuhr zu einem nicht näher gezeigten Aktor geschaltet werden, der einen elektrischen Verbraucher schaltet, der Gefahrenpotential aufweist und daher sicher ausgeschaltet werden soll. Dazu sind in die Verbindung zwischen den Klemmen 32, 34 bzw. 36, 38 jeweils zwei Relais 40, 42 bzw. 44, 46 in Reihe geschaltet. Um den Stromfluss zu erhalten, müssen beide Relais 40, 42 bzw. 44, 46 im geschlossenen Zustand sein, sie sind also redundant. Die Relais 40, 42 bzw. 44, 46 werden von den redundanten Mikrocontrollern der Steuereinheit 10 unabhängig gesteuert.

Um die Funktion des elektrischen Verbrauchers im Gefahrenfall zu unterbrechen oder zumindest zu beeinflussen, sind verschiedene, beispielhaft in der folgenden FIG 2, jedoch nicht in der FIG 1 gezeigte Geber an die Sicherheitssteuerung 1 anschließbar. Diese können z.B. Not-Aus-Schalter, Lichtschranken, Türpositionsschalter etc. sein. Zum Anschluss dieser Geber weist die Sicherheitssteuerung 1 neben den Klemmen 24 - 30 am Eingangserweiterungsmodul 4 auch Klemmen 12 - 22 auf, die die Geber mit Strom versorgen können. An einigen dieser Klemmen 12 - 22 liegt im Ausführungsbeispiel stets eine kleine positive Gleichspannung an, dies ist jedoch nicht zwingend, z.B. bei sog. Open-Collector oder Tri-State-Ausgängen. Alternativ können an anderen dieser Klemmen 12 - 22 auch Prüfsignale mit zyklischen, pulsartigen Prüfpulsen zur Leitungs- und Kurzschlussprüfung vorgesehen sein, die jeweils für eine kurze Dauer 0 Volt über der sonst erhaltenen Grundspannung einstellen. Die Prüfpulse können alternativ auch auf einen Trigger wie z.B. eine manuelle oder automatische veranlasste Prüfanfrage hin abgegeben werden. Alle Klemmen 12 - 38 können hardwareseitig beliebig, z.B. als Schraub- oder Federklemmen ausgestaltet sein.

FIG 2 zeigt ein Anwendungsbeispiel der Sicherheitssteuerung 1 im Gutzustand. Dabei wird aus Gründen der Übersichtlichkeit auf die Darstellung sämtlicher Teile der Sicherheitssteuerung 1 verzichtet und es wird nur ein Ausschnitt der Sicherheitssteuerung gezeigt.

FIG 2 zeigt einen Not-Aus-Schalter 48, der zwei redundante Kanäle mit zwei mechanisch verbundenen Schaltern 50, 52 umfasst. Die Schalter 50, 52 sind äquivalent, d.h. beide im Gutzustand geschlossen und im Zustand der Anforderung der Sicherheitsfunktion geöffnet. Hier ist der Not-Aus-Schalter 48 derart mit dem Sicherheitssteuerung 1 verbunden, dass Klemme 16 über den einen der Schalter 50 mit Klemme 26 verbunden ist, Klemme 14 über den anderen der Schalter 52 mit Klemme 24. Auf den Klemmen 24, 26 ergibt sich bei Freigabe somit die Signalkombination Plus, Plus, im Zustand der Anforderung der Sicherheitsfunktion die Signalkombination Null, Null. Andere Signalkombinationen deuten auf einen Fehler hin. In beiden letztgenannten Fällen wird eine Unterbrechung der Stromzufuhr des jeweils durch die noch im Folgenden erläuterte Logikprogrammierung mit dem Not-Aus-Schalter 48 verknüpften Stromkreises im Ausgangserweiterungsmodul 6 veranlasst, beispielsweise zwischen den Klemmen 36 und 38.

Das Beispiel in den FIG 1 und 2 dient nur der Veranschaulichung der Funktionsweise der Sicherheitssteuerung 1 und ist daher stark vereinfacht. In der Realität wird das System weit komplexer sein, d.h. es werden wesentlich mehr Module und Module anderer Art (z.B. sogenannten Gateway-Module für Schnittstellen zu Feldbussen) vorhanden sein, und es werden eine Vielzahl weiterer Klemmen auf verschiedenen Modulen vorhanden sein, die eine Vielzahl von elektrischen Verbrauchern schalten können und an die eine Vielzahl von Gebern und Aktoren verschiedenster Art angeschlossen werden kann. Auch müssen die Klemmen nicht notwendig nur eine Funktion erfüllen sondern können ggf. auch variabel als Ein- oder Ausgangsklemmen verwendet werden.

Die Klemmenbelegung und damit letztlich die an den Klemmen zu erwartenden Signalkombinationen sowie die logische Verknüpfung zwischen den Geber- und Aktorsignalen müssen in der Steuereinheit 10 der Sicherheitssteuerung 1 hinterlegt sein, so dass diese bei entsprechender Signalisierung die Abschaltung der richtigen elektrischen Verbraucher veranlasst. Dies geschieht durch Übergabe einer entsprechenden Konfiguration an eine in der Steuereinheit 10 hinterlegte Firmware. Da die Konfiguration letztlich die gesamten logischen Verknüpfungen zwischen Gebern und Aktoren festlegt, wird sie im Folgenden vereinfachend als Programm bezeichnet.

Die Erstellung dieses Programms erfolgt an einem digitalen Computer 54, der in FIG 3 gezeigt ist. Der Computer 54 weist Eingabegeräte wie eine Tastatur 56 und eine Maus 58 auf sowie einen Bildschirm 60 als Ausgabegerät. Über eine serielle oder parallele Schnittstelle oder z.B. über Ethernet ist er mit der Sicherheitssteuerung 1 verbunden. Auf dem Computer 54 wird durch einen Benutzer auf einer grafischen Programmieroberfläche anhand der angedachten Geber- und Aktorkombination sowie der gewünschten logischen Verknüpfung das Programm erstellt, geprüft und anschließend in die Steuereinheit 10 der Sicherheitssteuerung 1 übertragen. In einer alternativen, nicht gezeigten Ausführungsform kann der digitale Computer 54 auch als Tablet mit Touchscreen ausgestaltet sein. Insofern im Folgenden im Ausführungsbeispiel von Mausklick oder Mausbewegung gesprochen wird, wäre dies im Falle eines Tablets durch Antippen und entsprechendes Ziehen des Fingers durchzuführen.

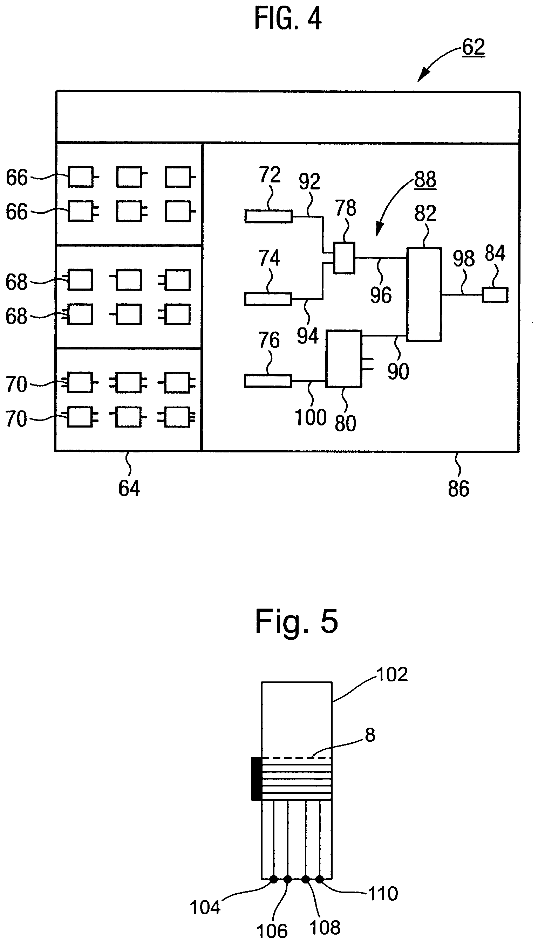

Eine solche, auf einem Bildschirm 60 dargestellte Programmieroberfläche 62 ist in der FIG 4 gezeigt. Die Programmieroberfläche 62 weist einen ersten Teilbereich 64 auf, in dem Funktionsblöcke 66, 68, 70 dargestellt sind. Die Funktionsblöcke 66, 68, 70 sind dabei in drei Gruppen gruppiert. Die erste Gruppe umfasst Funktionsblöcke 66, denen jeweils ein Geber zugeordnet ist, z.B. Not-Aus-Schalter einkanalig, Not-Aus-Schalter zweikanalig etc. Diese Funktionsblöcke 66 symbolisieren ein Eingangssignal eines solchen Gebers, wobei in der Logikprogrammierung die hardwareseitig realisierte Redundanz (siehe oben) bereits nicht mehr für den Benutzer ersichtlich ist, da die Fehlerüberwachung von der Firmware der Sicherheitssteuerung 1 auch ohne gesonderte Programmierung selbst geleistet wird. Der Benutzer soll im Rahmen der Programmierung nur festlegen, wie die Betätigung eines solchen Gebers wirkt. So würde beim in FIG 2 gezeigten zweikanaligen Not-Aus-Schalter, obwohl dieser real zwei redundante Kanäle umfasst, in der Logikprogrammierung auf der Programmieroberfläche 62 nur ein einzelnes Ausgangssignal angezeigt, welches dann in der Logik weiter verknüpft wird.

Entsprechend umfasst die zweite Gruppe von Funktionsblöcke 68 solche Symbole, die Ausgangssignale an Aktoren symbolisieren. Das oben Gesagte gilt hier analog. Die dritte Gruppe umfasst schließlich Funktionsblöcke 70, die Logikbausteine sind. Diese können einfache logische Kombinationen wie "UND" oder "ODER" sein, komplexere Auswerter wie Flip-Flops, Taktgeneratoren oder aber applikationsspezifische Funktionsblöcke 70 für Abschaltverzögerungen, Pressen etc. In nicht gezeigten Ausführungsbeispielen können die Funktionsblöcke 66, 68, 70 auch nach weiteren inhaltlichen Kriterien untergruppiert sein.

Der Benutzer wählt im Rahmen der Logikprogrammierung nun einen Funktionsblock 66, 68, 70 aus. Die Auswahl erfolgt durch Bewegen des nicht näher dargestellten Mauszeigers auf den gewünschten Funktionsblock 66, 68, 70 und einfachen Mausklick auf den jeweils gewünschten Funktionsblock 66, 68, 70. Die Auswahl durch Mausklick führt dazu, dass eine Instanz 72 - 84 des Funktionsblocks 66, 68, 70 erzeugt wird, die an den Mauszeiger angeheftet wird.

Die Instanz 72 - 84 wird erzeugt, da mehrere gleichartige Funktionsblöcke 66, 68, 70 benötigt werden können und daher ggf. mehrfach nacheinander der gleiche Funktionsblock 66, 68, 70 ausgewählt werden muss. Die Instanz 72 - 84 kann in ihrer Darstellung dabei identisch mit dem Funktionsblock 66, 68, 70 sein, muss dies aber nicht. Im Ausführungsbeispiel sind die Instanzen 72 - 84 deutlich breiter und flacher als der Funktionsblock 66, 68, 70, um ggf. Text darauf darzustellen. Enthält der Funktionsblock 66, 68, 70 ein kennzeichnendes Piktogramm, so kann dieses Piktogramm in Ausführungsformen auch auf der Instanz 72 - 84 ggf. vergrößert oder verkleinert, dargestellt werden.

Für die Festlegung der logischen Verknüpfung dient ein im zweiten Teilbereich 86 der Programmieroberfläche 62 dargestelltes, vom Programmierer mithilfe der Instanzen 72 - 84 erstelltes Logikschaltbild 88. Im Logikschaltbild 88 erfolgt die Programmierung anhand grafischer Symbole, die logisch durch Linienzug verknüpft werden. Eingangssignale von Gebern, repräsentiert durch Instanzen 72, 74, 76 aus den Funktionsbausteinsymbolen 66 werden durch Logikbausteine in den Instanzen 78, 80 verarbeitet und in Ausgangssignale für Aktoren, repräsentiert durch Instanz 84, verarbeitet. Die Hinterlegung der Instanzen 72 - 84 erfolgt nach Auswahl der Funktionsblöcke 66, 68, 70 (siehe oben) durch einfaches Dragand-Drop-Verfahren. Durch einfaches Verbinden der Signalein- und -ausgänge jedes Funktionsblocks 66, 68, 70 mit Linien 90 - 100 können die Signale wie gewünscht weitergeleitet werden. Durch geschickte Auswahl und Kombination von Funktionsblöcken 66, 68, 70 und entsprechende Verbindung der Instanzen 72 - 84 wird somit ein Logikschaltbild 88 erzeugt, das die Schaltlogik definiert. Zusätzlich werden die Klemmenzuordnungen festgelegt, d.h. für solche Funktionsblöcke 66, 68, 70, welche direkte Signale von physikalischen Eingangsklemmen empfangen oder solche Signale für physikalische Ausgangsklemmen der Sicherheitssteuerung 1 erzeugen sollen, wird über eine entsprechende Zuordnung einer Klemmenbezeichnung festgelegt, von welcher Klemme das entsprechende Signal empfangen bzw. an welche Klemme es gesendet werden soll.

Nicht alle sicherheitsrelevanten Systeme können jedoch mit binären Gebern wie dem in FIG 2 gezeigten Not-Aus-Schalter 48 überprüft werden. Häufig ist eine sichere (d.h. in der Regel auch redundante) Überwachung von Temperaturen, Strömen etc. notwendig. Hierfür müssen häufig separate Systeme vorgesehen werden, was die Komplexität der Überwachung erhöht. Stark vereinfacht wird dies hingegen, wenn die Sicherheitssteuerung 1 selbst analoge Eingangssignale erfassen und verarbeiten kann. Hierfür ist ein Analogmodul 102 vorgesehen, welches in FIG 5 schematisch dargestellt ist und über den Rückwandbus 8 an die in FIG 1 gezeigte Sicherheitssteuerung 1 angeschlossen werden kann.

Das Analogmodul 102 wird mit den übrigen Modulen 2, 4, 6 über den Rückwandbus 8 datenseitig verbunden. Es weist vier Klemmen 104 - 110 als Signaleingänge für analoge Signale auf. Das heißt, dass die Klemmen 104 - 110 nicht für die Verarbeitung von z.B. +24 V Signalen oder Prüfpulsen ausgelegt sind, sondern vielmehr z.B. Strom- oder Spannungswerte erfassen, die von analogen Sensoren wie Temperatursensoren o.Ä. erzeugt werden.

In einem, in den Zeichnungen nicht dediziert dargestellten Beispiel soll mittels des Analogmoduls 102 und der Sicherheitssteuerung 1 der Luftmassenstrom und der Gasmassenstrom zu einem Brenner überprüft werden. Die Norm EN 746-2 fordert hier, dass der Luftmassenstrom zum Gasmassenstrom immer in einem Verhältnis stehen muss, das sicher gezündet werden kann und im gesamten Betriebsbereich eine stabile und sichere Verbrennung an jedem einzelnen Brenner sicherstellt. Fehler oder Störungen sollten bewirken, dass das System zu einem höheren Luftüberschuss neigt oder eine Störabschaltung bewirkt, falls das Luft/Gas-Verhältnis zu einem nicht sicheren Zustand führt.

Hierfür werden an die Klemmen 104 - 110 geeignete Sensoren angeschlossen, die Massenströme zu dem Brenner messen können. An die Klemmen 104 und 106 werden (redundante) Sensoren angeschlossen, die den Luftmassenstrom zu dem Brenner messen. An die die Klemmen 108 und 110 werden (ebenfalls redundante) Sensoren angeschlossen, die den Gasmassenstrom zu dem Brenner messen. Alle Sensoren geben ein zu dem Massenstrom proportionales Signal aus, im Ausführungsbeispiel einen Strom zwischen 4 und 20 mA. Hierdurch stehen der Sicherheitssteuerung 1 über das Analogmodul 102 die Massenströme von Gas und Luft jeweils redundant zur Verfügung.

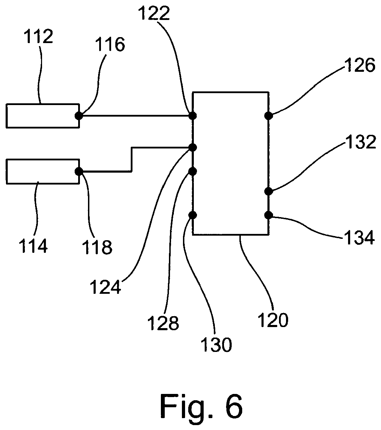

Die so generierten Signale müssen innerhalb der Logik der Programmierung der Sicherheitssteuerung 1 weiterverarbeitet werden. Hierfür werden in der Programmieroberfläche 62 geeignete Funktionsbausteine/-blöcke zur Verfügung gestellt, die in FIG 6 gezeigt sind. Zunächst werden im ersten Bereich Funktionsbausteinsymbole für redundante Analogsignal-Schalteingänge bereitgestellt. FIG 6 zeigt ausschnittsweise den rechten Bereich 86 der Programmieroberfläche 62, in den zwei Instanzen 112, 114 dieser Funktionsbausteinsymbole gezogen wurden. Die erste Instanz 112 wurde so parametriert, dass sie die an den Klemmen 104, 106 erfassten Signale auswertet, d.h. den Luftmassenstrom. Die zweite Instanz 114 wurde so parametriert, dass sie die an den Klemmen 108, 110 erfassten Signale auswertet, d.h. den Gasmassenstrom.

Wie oben erläutert, ist in der Logikprogrammierung die hardwareseitig realisierte Redundanz durch die doppelt vorhandenen Sensoren nicht mehr für den Benutzer ersichtlich, da die Fehlerüberwachung, d.h. eine Abweichung der jeweils beiden redundanten Kanäle aus den redundanten Sensoren, von der Firmware der Sicherheitssteuerung 1 selbst geleistet wird. Die Ausgänge 116, 118 der Instanzen 112, 114 stellen somit lediglich den analogen Wert der gemessenen Größe für die Programmierung zur Verfügung, d.h. hier 4 - 20 mA. Zudem ist zu berücksichtigen, dass die dargestellte hardwareseitige Redundanz nur für besonders hohe Sicherheitskategorien vonnöten ist. Für niedrigere Sicherheitskategorien kann auch eine einfache Signalisierung mit je nur einem Sensor genügen.

Für die Verwendung eines Analogmoduls 102 und die Verarbeitung der an den Ausgängen 116, 118 zur Verfügung gestellten Signale in der Logikprogrammierung sind nun Funktionsbausteine erforderlich, mit denen die analogen Signale in digitale Signale, die logisch weiterverarbeitet werden können, umgewandelt werden. Da hierfür im Gegensatz zu nicht sicheren SPSen keine freie Programmierung möglich ist, sondern jeder komplexere Funktionsbaustein auf seine funktionale Sicherheit hin geprüft und zertifiziert werden muss, muss hierfür eine geeignete Auswahl von Funktionsbausteinen zur Verfügung gestellt werden, die möglichst viele Anwendungsfälle abdeckt.

Den oben beschriebenen und andere Anwendungsfälle (z.B. Temperaturüberprüfungen) deckt der in FIG 6 als Instanz 120 dargestellte Funktionbaustein ab, der im Folgenden näher erläutert wird: Der Funktionsbaustein weist zwei Eingänge 122, 124 auf, die mit Linien 126, 128 jeweils mit den Ausgängen 116, 118 der Instanzen 112, 114 verbunden sind. Die Signale der analogen Sensoren werden also den Eingängen 122, 124 zugeführt und in der Instanz 120 des Funktionsbausteins verarbeitet. Konkret bildet der Funktionsbaustein ein Verhältnis Ia1/Ia2 der Signale an den Eingängen 122, 124.

Beim Einfügen der Instanz 120 auf der Programmieroberfläche 62 oder auch nachträglich können Parameter hinterlegt werden. Zunächst kann die Instanz 120 mit zwei Verhältnissen n1/n2 und n3/n4 parametriert werden, die ein Fenster bilden, innerhalb dessen am Ausgang 126 ein digitales Signal ausgegeben wird, welches einen Gutzustand repräsentiert, z.B. HIGH oder 1. Dieses digitale Signal kann dann im Logikschaltbild 88 weiterverarbeitet werden durch Kombination mit weiteren Funktionsbausteinen. Die Werte n1-n4 werden hierbei als positive ganze Zahlen angegeben.

Die Instanz 120 kann aber auch nur mit einem Verhältnis n1/n2 auf Überschreitung oder Unterschreitung parametriert werden, d.h. das bei Über- beziehungsweise Unterschreitung des parametrierten Verhältnisses durch das Verhältnis Ia1/Ia2 aus den Instanzen 112, 114 der Gutzustand aufgehoben und am Ausgang ein digitales Signal ausgegeben wird, welches einen Schlechtzustand repräsentiert, z.B. LOW oder 0.

In beiden Fällen kann ein Hysteresewert parametriert werden. Der Hysteresewert wird in Prozent, bezogen auf das parametrierte Verhältnis, angeben. Dabei entspricht das eingestellte Verhältnis 100%. Der Hysteresewert vermeidet, dass, sobald das Verhältnis wieder in den Gutbereich gelangt, sofort wieder ein Gutzustand am Ausgang 126 ausgegeben wird. Vielmehr muss das Verhältnis einen durch den Hysteresewert definierten Abstand zum definierten Verhältnis n1/n2 bzw. n3/n4 haben.

In einem Beispiel wird ein Verhältnis von n1=1, n2=2 parametriert, d.h. es ergibt sich ein Verhältnis von 1/2=0,5. Dies entspricht 100%, wobei die Instanz 120 auf Überschreitung konfiguriert wird. Nun wird zusätzlich eine Hysterese von 10% parametriert, so dass sich ein Korrekturwert von 0,05 ergibt. Das bedeutet, dass bei konfigurierter Überschreitung bei einem Verhältnis von 0,5 abgeschaltet wird, d.h. ein Schlechtzustand am Ausgang 126 ausgegeben wird. Sinkt das Verhältnis Ia1/Ia2 im Betrieb dann wieder, wird erst bei einem um den Hysteresewert verschobenen Verhältnis von 0,5-0,05=0,45 wieder angeschaltet, d.h. der Ausgang 126 auf einen Gutzustand geschaltet.

Weiterhin weist der Funktionsbaustein für den Fall, dass zwei Verhältnisse, d.h. ein Fenster definiert wird, eine Plausibilitätsprüfung auf, die an einem weiteren Beispiel erläutert wird. In diesem Beispiel sollen zwei Temperaturen verglichen werden. Die Sensoren für die erste Temperatur an den Klemmen 104, 106 sind hierbei Temperatur-Stromsensoren, die Ströme von 0-20 mA ausgeben, die linear Temperaturen von 100-230 °C entsprechen. An den Klemmen 108, 110 sind hingegen Widerstandsthermometer angeschlossen, die Temperaturen von 50-200 °C messen können. Diese Informationen werden in der Instanz 120 hinterlegt.

Es werden die folgenden Verhältnisse parametriert: n1=50, n2=200, d.h. n1/n2=0,25 auf Unterschreitung; n3=200, n4=250, d.h. n3/n4=0,8 auf Überschreitung. Die Plausibilitätskontrolle des Funktionsbausteins prüft nun, ob tatsächlich der höhere Verhältniswert als Überschreitung konfiguriert wurde und der niedrigere Verhältniswert als Unterschreitung. Dies ist hier der Fall, andernfalls würde ein Fehler ausgegeben. Der Baustein ist daher nun so konfiguriert, dass am Ausgang 126 ein Gutzustand ausgegeben wird, wenn das Verhältnis der Eingänge 122, 124 zwischen 0,25 und 0,8 liegt. Für beide Grenzen, d.h. oberes und unteres Verhältnis kann ein Hysteresewert definiert werden, wie oben beschrieben.

Der Funktionsbaustein weist zudem einen digitalen Eingang 128 zum Muting, d.h. zur Abschaltunterdrückung auf, die auch zeitlich begrenzbar ist. Weiterhin weist der Funktionsbaustein einen digitalen Eingang 130 zum Reset auf. Liegt hier ein HIGH-Signal an, wird die Instanz 120 zurückgesetzt.

Weiterhin weist der Funktionsbaustein zwei Ausgänge auf, die im Falle eines Fehlers, z.B. einer Fehleraufdeckung innerhalb der Redundanz, bzw. bei einer Warnung jeweils ein HIGH-Signal ausgeben.

Durch die Bereitstellung des skizzierten Funktionsbausteins in der Programmieroberfläche 62 ist es möglich, eine Vielzahl von Anwendungen bezogen auf die funktionale Sicherheit und analoge Signale innerhalb einer Sicherheitssteuerung 2 mit Analogmodul 102 abzubilden.

**Bezugszeichenliste**

| 1 | Sicherheitssteuerung |
|---|---|
| 2 | Kopfmodul |
| 4 | Eingangserweiterungsmodul |
| 6 | Ausgangserweiterungsmodul |
| 8 | Rückwandbus |
| 10 | Steuereinheit |
| 12 - 38 | Klemme |
| 40 - 46 | Relaus |
| 48 | Not-Aus-Schalter |
| 50, 52 | Schalter |
| 54 | Computer |
| 56 | Tastatur |
| 58 | Maus |
| 60 | Bildschirm |
| 62 | Programmieroberfläche |
| 64 | erster Teilbereich |
| 66, 68, 70 | Funktionsbausteinsymbol |
| 72 - 84 | Instanz |
| 86 | zweiter Teilbereich |
| 88 | Logikschaltbild |
| 90 - 100 | Linie |
| 102 | Analogmodul |
| 108 - 110 | Klemme |
| 112, 114 | Instanz |
| 116, 118 | Ausgang |
| 120 | Instanz |
| 122, 124 | Eingang |
| 126 | Ausgang |
| 128, 130 | Eingang |
| 132, 134 | Ausgang |

**Patentansprüche**

1. Verfahren zum Programmieren einer Sicherheitssteuerung (1), ausgelegt zum gemäß einer Sicherheitsvorschrift sicheren Ein- und Ausschalten eines elektrischen Verbrauchers, wobei Schalteingänge (24, 26, 28, 30, 104, 106, 108, 110) und/oder Schaltausgänge (32, 34, 36, 38) der Sicherheitssteuerung (1) logisch verknüpft werden,

   wobei die Schalteingänge (24, 26, 28, 30, 104, 106, 108, 110) zwei Analogsignal-Schalteingänge (104, 106, 108, 110) umfassen,
   wobei die logische Verknüpfung einen Funktionsbaustein (120) umfasst, der zumindest zwei Eingänge (122, 124) aufweist, die jeweils zur Aufnahme eines vorverarbeiteten Eingangssignals von einem der Analogsignal-Schalteingänge (104, 106, 108, 110) ausgebildet sind,
   wobei ein erstes Verhältnis für die an den Eingängen (122, 124) anliegenden Signale vorgegeben wird,
   der Funktionsbaustein (120) einen Ausgang (126) aufweist, dessen Signal in Abhängigkeit des ersten vorgegebenen Verhältnisses gebildet wird,

   wobei das Verhalten des Funktionsbausteins (120) durch die Gleichung

   $$\frac{Ia\,1}{Ia\,2} = \frac{n_1}{n_2}$$

   repräsentiert wird,
   wobei der Ausgang (126) ein digitaler Ausgang (126) ist,
   wobei der Ausgang (126) bei Über- oder Unterschreiten des ersten vorgegebenen Verhältnisses, d.h. im Falle des Überschreitens wenn die Relation Ia1 * n2 > Ia2 * n1 wahr wird und es vorher nicht war bzw. im Falle des Unterschreitens wenn die Relation Ia1 * n2 < Ia2 * n1 wahr wird und es vorher nicht war, seinen Wert ändert und dabei einen ersten vorgegebenen Wert annimmt, wobei Ia1 das erste analoge Eingangssignal und Ia2 das zweite analoge Eingangssignal repräsentiert und n1 und n2 positive ganze Zahlen sind.

2. Verfahren nach Anspruch 1, bei dem ein zweites Verhältnis vorgegeben wird, und das Signal des Ausgangs (126) weiterhin in Abhängigkeit des zweiten vorgegebenen Verhältnisses gebildet wird.

3. Verfahren nach Anspruch 2, bei dem der Ausgang (126) bei Überschreiten des ersten vorgegebenen Verhältnisses oder Unterschreiten des zweiten vorgegebenen Verhältnisses seinen Wert ändert und dabei den ersten vorgegebenen Wert annimmt.

4. Verfahren nach Anspruch 1, bei dem der Ausgang (126) nach einem Über- oder Unterschreiten des ersten vorgegebenen Verhältnisses seinen Wert im Falle des Überschreitens erst wieder nach Unterschreiten des ersten vorgegebenen Verhältnisses abzüglich eines ersten vorgegebenen Hysteresewerts ändert, oder im Falle des Unterschreitens erst wieder nach Überschreiten des ersten vorgegebenen Verhältnisses zuzüglich eines ersten vorgegebenen Hysteresewerts ändert.

5. Verfahren nach Anspruch 3 oder 4, bei dem der Ausgang (126) nach einem Unterschreiten des zweiten vorgegebenen Verhältnisses seinen Wert erst wieder nach Überschreiten des zweiten vorgegebenen Verhältnisses zuzüglich eines zweiten vorgegebenen Hysteresewerts ändert.

6. Verfahren nach Anspruch 4 oder 5, bei dem der erste oder der zweite Hysteresewert als prozentualer Anteil des ersten bzw. zweiten Verhältnisses angegeben wird.

**7.** Verfahren nach Anspruch 3 oder einem auf Anspruch 3 rückbezogenen Anspruch, bei dem der erste vorgegebene Wert einem Schlechtzustand entspricht und eine Plausibilitätsprüfung durchgeführt wird, ob der Wert des ersten vorgegebenen Verhältnisses größer ist als der Wert des zweiten vorgegebenen Verhältnisses.

**8.** Verfahren nach einem der vorhergehenden Ansprüche, bei dem die von den Analogsignal-Schalteingängen (104, 106, 108, 110) erfassten Analogsignale Gas- oder Luftmassenströme anzeigen.

**9.** Computerprogrammprodukt, welches direkt in den internen Speicher eines digitalen Computers (54) geladen werden kann und Softwarecodeabschnitte umfasst, die, wenn sie auf dem Computer (54) ausgeführt werden, den Computer (54) zum Ausführen des Verfahrens nach einem der vorhergehenden Ansprüche ertüchtigen.

**10.** Digitaler Computer (54), in dessen internen Speicher das Computerprogrammprodukt nach Anspruch 9 geladen ist.

**11.** Computerprogrammprodukt, welches direkt in den internen Speicher einer Sicherheitssteuerung (1) geladen werden kann und Softwarecodeabschnitte umfasst, die mittels des Verfahrens nach einem der Ansprüche 1 bis 8 erstellt wurden.

**12.** Sicherheitssteuerung (1), ausgelegt zum gemäß einer Sicherheitsvorschrift sicheren Ein- und Ausschalten eines elektrischen Verbrauchers, programmiert mit dem Verfahren nach einem der Ansprüche 1 bis 8.

**Claims**

**1.** A method for programming a safety controller (1), designed for switching an electrical load on and off safely in accordance with a safety regulation, wherein switching inputs (24, 26, 28, 30, 104, 106, 108, 110) and/or switching outputs (32, 34, 36, 38) of the safety controller (1) are logically linked,

wherein the switching inputs (24, 26, 28, 30, 104, 106, 108, 110) comprise two analog signal switching inputs (104, 106, 108, 110) wherein the logical link comprises a function module (120) having at least two inputs (122, 124) each adapted to receive a pre-processed input signal from one of the analog signal switching inputs (104, 106, 108, 110), wherein a first ratio is predetermined for the signals applied to the inputs (122, 124), the function module (120) has an output (126) whose signal is formed as a function of the first predefined ratio, wherein the behaviour of the function module (120) is represented by the equation

$$\frac{Ia\,1}{Ia\,2} = \frac{n_1}{n_2},$$

wherein the output (126) is a digital output (126), wherein the output (126) changes its value in the case of an exceeding or falling below of the first predetermined ratio, i.e. in the case of exceeding when the relation Ia1 * n2 > Ia2 * n1 becomes true and it was not true before, respectively in the case of falling below when the relation Ia1 * n2 < Ia2 * n1 becomes true and it was not true before, and thereby assumes a first predetermined value, wherein Ia1 represents the first analog input signal and Ia2 the second analog input signal and n1 and n2 are positive integers.

**2.** The method of claim 1, wherein a second ratio is predetermined, and the signal of the output (126) is further formed dependent on the second predetermined ratio.

**3.** The method of claim 2, wherein the output (126) changes value upon an exceeding of the first predetermined ratio or a falling below of the second predetermined ratio, thereby assuming the first predetermined value.

**4.** The method of claim 1, wherein the output (126) changes its value after an exceeding or falling below of the first predetermined ratio

in case of an exceeding only again after falling below the first predetermined ratio minus a first predetermined hysteresis value, or case of a falling below only again after exceeding the first predetermined ratio plus a first predetermined hysteresis value.

**5.** The method of claim 3 or 4, wherein the output (126), after a falling below of the second predetermined ratio, does not change its value again until the second predetermined ratio plus a second predetermined hysteresis value is exceeded.

**6.** The method of claim 4 or 5, wherein the first or second hysteresis value is expressed as a percentage of the first or second ratio, respectively.

**7.** The method of claim 3 or a claim dependent on claim 3, wherein the first predetermined value corresponds to a bad condition and a plausibility check is performed to determine whether the value of the first predetermined ratio is greater than the value of the second predetermined ratio.

8. The method of any one of the preceding claims, wherein the analog signals sensed by the analog signal switching inputs (104, 106, 108, 110) indicate gas or air mass flows.

9. A computer program product that can be loaded directly into the internal memory of a digital computer (54) and comprises software code portions that, when executed on the computer (54), enable the computer (54) to perform the method of any one of the preceding claims.

10. A digital computer (54) having loaded into its internal memory the computer program product of claim 9.

11. A computer program product which can be loaded directly into the internal memory of a security controller (1), comprising software code portions created by means of the method according to any one of claims 1 to 8.

12. A safety controller (1) adapted to safely switch on and off an electrical load according to a safety rule, programmed with the method according to any one of claims 1 to 8.

## Revendications

1. Un procédé de programmation d'un contrôleur de sécurité (1), conçu pour allumer et éteindre en toute sécurité une charge électrique conformément à une règle de sécurité, dans lequel des entrées de commutation (24, 26, 28, 30, 104, 106, 108, 110) et/ou des sorties de commutation (32, 34, 36, 38) du contrôleur de sécurité (1) sont logiquement liées,

dans lequel les entrées de commutation (24, 26, 28, 30, 104, 106, 108, 110) comprennent deux entrées de commutation de signal analogique (104, 106, 108, 110),
dans lequel le lien logique implique un module fonctionnel (120) qui a au moins deux entrées (122, 124), dont chacune est adaptée pour recevoir un signal d'entrée prétraité de l'une des entrées de commutation de signal analogique (104, 106, 108, 110),
dans lequel un premier rapport est prédéterminé pour les signaux présents aux entrées (122, 124),
le module fonctionnel (120) a une sortie (126), dont le signal est formé en fonction du premier rapport prédéfini,
dans lequel le comportement du module fonctionnel (120) est représenté par l'équation

$$\frac{Ia\,1}{Ia\,2} = \frac{n_1}{n_2}$$

dans lequel la sortie (126) est une sortie numérique (126),
dans lequel la sortie (126) change sa valeur en cas d'un dépassement ou d'une chute en-dessous du premier rapport prédéfini, c'est-à-dire dans le cas d'un dépassement lorsque la relation Ia1 * n2 > Ia2 * n1 devient vraie et alors qu'elle n'était pas vraie précédemment, respectivement dans le cas d'une chute en-dessous lorsque la relation Ia1 * n2 > Ia2 * n1 devient vraie alors qu'elle ne l'était pas auparavant, et en conséquence présente une première valeur prédéterminée, dans lequel Ia1 représente le premier signal d'entrée analogique et Ia2 le second signal d'entrée analogique et n1 et n2 sont des entiers positifs.

2. Le procédé de la revendication 1, dans lequel un deuxième rapport est prédéterminé, et le signal de la sortie (126) est en outre formé en fonction du deuxième rapport prédéterminé.

3. Le procédé de la revendication 2, dans lequel la sortie (126) change de valeur lorsque le premier rapport prédéterminé est dépassé ou en cas de chute en dessous du deuxième rapport prédéterminé, prenant ainsi la première valeur prédéterminée.

4. Le procédé de la revendication 1, dans lequel la sortie (126) change sa valeur après un dépassement ou une chute en-dessous du premier rapport prédéterminé,

en cas d'un dépassement uniquement postérieurement une chute en-dessous du premier rapport prédéterminé moins une première valeur d'hystérésis prédéterminée ; ou
en cas de chute en dessous, uniquement à la suite d'un dépassement du premier rapport prédéterminé plus une première valeur d'hystérésis prédéterminée.

5. Le procédé de la revendication 3 ou 4, dans lequel la sortie (126), après être tombée en dessous du deuxième rapport prédéterminé, ne change plus de valeur tant que le deuxième rapport prédéterminé plus une deuxième valeur d'hystérésis prédéterminée n'a pas été dépassé.

6. Le procédé de la revendication 4 ou 5, dans lequel la première ou la seconde valeur d'hystérésis est exprimée en pourcentage du premier ou du second rapport, respectivement.

7. Le procédé de la revendication 3 ou d'une revendication faisant référence à la revendication 3, dans lequel la première valeur spécifiée correspond à une mauvaise condition et un contrôle de plausibilité est effectué pour savoir si la valeur du premier rapport prédéterminé est supérieur à la valeur du second rapport prédéterminé.

8. Le procédé de l'une quelconque des revendications précédentes, dans lequel les signaux analogiques détectés par les entrées de commutation de signaux analogiques (104, 106, 108, 110) indiquent des débits massiques de gaz ou d'air.

9. Un programme d'ordinateur pouvant être chargé directement dans la mémoire interne d'un ordinateur numérique (54) et comprenant des élément de code de logiciel qui, lorsque exécutés dans l'ordinateur (54), permettent à celui-ci d'exécuter le procédé de l'une quelconques des revendications précédentes.

10. Un Ordinateur numérique (54) ayant le programme d'ordinateur de la revendication 9 chargé dans sa mémoire interne.

11. Un programme d'ordinateur qui peut être chargé directement dans la mémoire interne d'un contrôleur de sécurité (1) et comprenant des éléments de code de logiciel qui ont été créées à l'aide du procédé de l'une quelconque des revendications 1 à 11.

12. Un contrôleur de sécurité (1), conçu pour allumer et éteindre une charge électrique en toute sécurité conformément à une règle de sécurité, programmé avec le procédé selon l'une des revendications 1 à 8.

## FIG. 1

## FIG. 2

## FIG. 3

# FIG. 4

# Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **AUS KLAUS KRONER.** Luft/Gas-Verhältnisregelung an industriellen Beheizungseinrichtungen. *GAS-WÄRME International,* 01. April 2006, (55), 263-269